# EUROPEAN PATENT APPLICATION

(11) **EP 1 404 130 A1**
(43) Date of publication of application: **31.03.2004**
(21) Application number: 02021395.5
(22) Date of filing: 24.09.2002
(51) Int. Cl.: H04N 7/01, H04N 5/445

(54) **Method and apparatus for processing a video signal mixed with an additional image signal**

(71) Applicant: MATSUSHITA ELECTRIC INDUSTRIAL CO., LTD., Kadoma City, Osaka Pref., 571-8501 (JP)
(72) Inventor: Salzer, Sven, 35510 Butzbach (DE); Janssen, Frank, 63225 Langen (DE)
(74) Representative: Grünecker, Kinkeldey, Stockmair & Schwanhäusser Anwaltssozietät

(57) **Abstract**

A method and an apparatus for processing a video signal is provided for processing an input video signal comprising a plurality of subsequent video images. An additional image is superimposed on the input video signal in accordance with a control signal for producing a mixed video signal. Said control signal indicates the image area for superimposing the additional image. The mixed video signal is subsequently processed by a processing circuit in accordance with the control signal. The control signal indicates a different processing for separate image areas. In that way, a video signal, which has additional image data superimposed thereon may be processed without the occurrence of artifacts originating from a uniform processing of the mixed video signal.

## Description

The present invention relates to a method for processing a video signal and a video processing unit therefore. In particular, the present invention relates to a pixel based switching of different up-conversion algorithms.

Video signals usually consist of a series of subsequent images. These images are transmitted as frames of a progressive video signal or as fields in case of an interlaced video signal. A field comprises either the even or the odd lines of a video frame, and for transmitting the information of one frame two fields have to be transmitted. Today's common TV standards, namely PAL, SECAM or NTSC transmit video signals comprising fields at 50 Hz or 60 Hz field rate, respectively.

For displaying of a video signal, the most commonly used display device still is the cathodic ray tube screen (CRT), due to its good price/quality ratio. A small or medium size CRT screen may be operated at the standard 50 Hz or 60 Hz field rate without flicker being noticed. However, as nowadays CRT screens are available at larger sizes the problem arises that flicker of large areas is perceptible when CRT screens are operated at the default 50Hz or 60Hz field rate of the TV standards.

The flicker is greatly reduced by operating the CRT screen at a higher field or frame rate. Frame rates up to 100Hz are desired. Thus, in order to improve the quality of the displayed video signal, an up-conversion of the video signal to a higher field rate or frame rate is used.

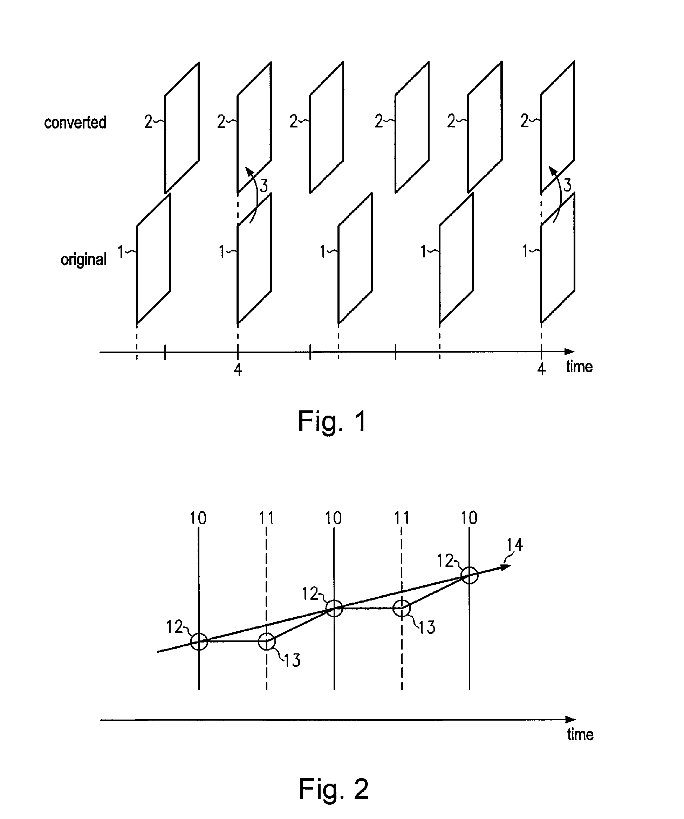

Fig. 1 illustrates a conversion of an input video signal to a different field/frame rate. The fields or frames 1 of the input video signal are spaced in equal time intervals. In a video signal at a different field/frame rate, fields/frames 2 are spaced at different time intervals. Depending on the ratio of the field/frame rate of the input video signal and the converted video signal, some fields or frames 1 of the input video signal may coincide in time with fields or frames 2 of the converted video signal.

Where fields/frames coincide (position 4 on the time axis), a field/frame 1 from the input video signal may be output (indicated by arrow 3) as field/frame 2 of the converted video signal. The remaining fields/frames 2 of the converted video signal need to be generated based on the fields/frames 1 of the original video signal.

For frame rate conversion, different techniques are known in the art. An example of a frame rate up-conversion from 50 Hz to 100 Hz will be illustrated below. Fig. 2 shows the frames of an up-converted video signal together with frames of the original video signal. Solid lines 10 correspond to frames taken from the original video signal and dashed lines 11 correspond to new frames which have been inserted between existing frames.

A simple approach for generating the additional frames to be inserted is the use of image data from existing frames. This approach, however, results in image degradation due to a visible discontinuity in the motion of objects. This effect is illustrated in Fig. 2. The motion of an object 12, 13 through the video frames 10 and 11 of the converted video signal deviates from the smooth motion 14 of object 12 in the original sequence of video frames 10, causing the perceived discontinuity of the motion.

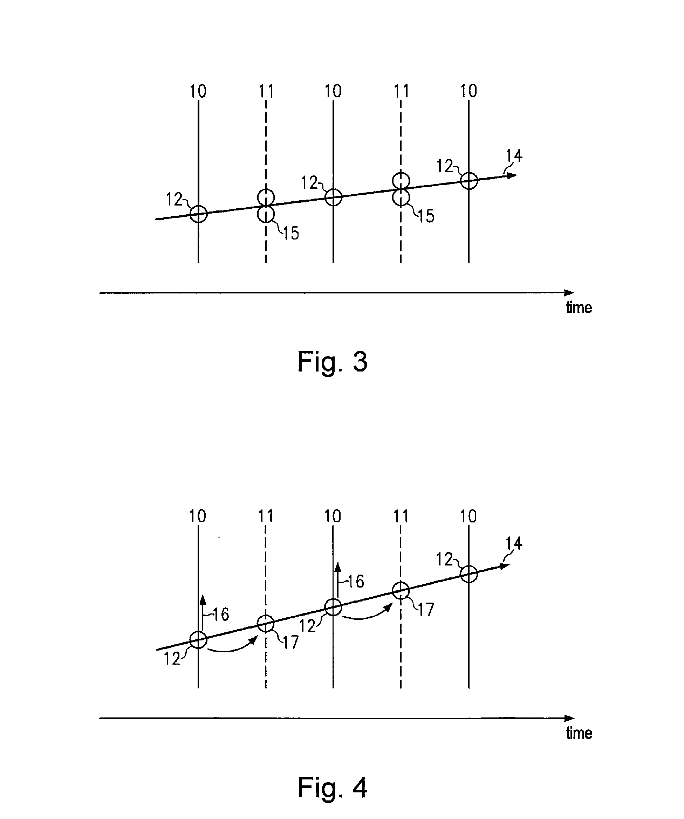

Another method for generating the additional frames 11 in a frame rate conversion is illustrated in Fig. 3. This approach is based on the interpolation of image data from adjacent frames 10. For the generation of each pixel of an additional frame 11 an averaging is performed over corresponding pixels of adjacent frames 10 of the original video signal. As a result, the distortion of motion is less visible. The motion becomes smoother but moving objects 12 appear blurred 15 in the generated frames. This method may be applied with good results when no motion or only slow motion is present in the video scenes.

In order to overcome the drawbacks of the above described approaches for generating the additional frames during frame rate conversion the technique of motion compensation, illustrated in Fig. 4, is now widely employed. The motion 14 of objects within frames 10 is detected by a motion estimation and represented by motion vectors. In one possible example, motion estimation is performed on a block basis. For the current video image, which is divided into a plurality of blocks, a best block match is searched in an adjacent frame. Motion vectors are obtained from the recognized block displacement. Based on the detected motion vector 16, the position 17 of an object in the frame to be inserted 11 is computed and image data of the object 12 is inserted correspondingly.

Motion compensation achieves good image quality for images with moving objects. However, motion estimation produces wrong motion vectors when scenes get more complex, e.g. when moving objects disappear behind other objects. Wrong motion vectors may lead to visible artifacts.

A conversion of a field rate of an input video signal can be performed in a similar manner. Therefore, a conversion of a field rate shall be encompassed when reference is made to a frame rate conversion in this description and in the claims.

A particular problem of displaying fields is that line flicker and aliasing may occur. A loss of resolution may be perceived in moving objects, as each field does carry only half of the image information and image information from separate fields is no longer perceived as being combined for moving objects. Further, de-interlacing is necessary in order to display an interlaced video signal on matrix-type displays which require a progressive video signal, such as LCD-screens and projectors. Performing a de-interlacing may reduce line flicker and blurring of fast moving objects and the produced video signal may be displayed on LCD-screens and the like.

De-interlacing is performed by generating lines which are missing in a field to produce a complete frame. Lines may be computed by using interpolation and motion compensation techniques, taking complementary lines of adjacent fields into account. Interpolation is usually performed by employing a vertical and a temporal filtering on lines of the adjacent fields. This de-interlacing method however, is not satisfactory for processing moving images and shows artifacts like motion blurring and aliasing.

De-interlacing which takes motion into account leads to the technique of motion compensated de-interlacing. In this method, a motion estimation determines a movement of image objects between two fields of an input video signal and assigns motion vectors to the image objects. In order to complement a current field, thus generating a frame, image data of adjacent fields may be shifted according to the determined motion vectors and used for correctly determine image data of missing lines. Like in the case of motion compensated up-conversion, a motion compensated de-interlacing may produce artifacts in case of wrong motion vectors.

In modern TV receivers and other video devices very often on-screen-displays (OSDs) are inserted to visualize additional information. An on-screen-display generally superimposes additional image data on the input video signal for displaying the additional image data together with the input video signal. Superimposing may on the one hand include the insertion of the additional image by replacing the original image data with additional image data. On the other hand, the additional image data may transparently overlay the original image data, which are still visible as a background image. Both methods shall be encompassed by the term "superimposing".

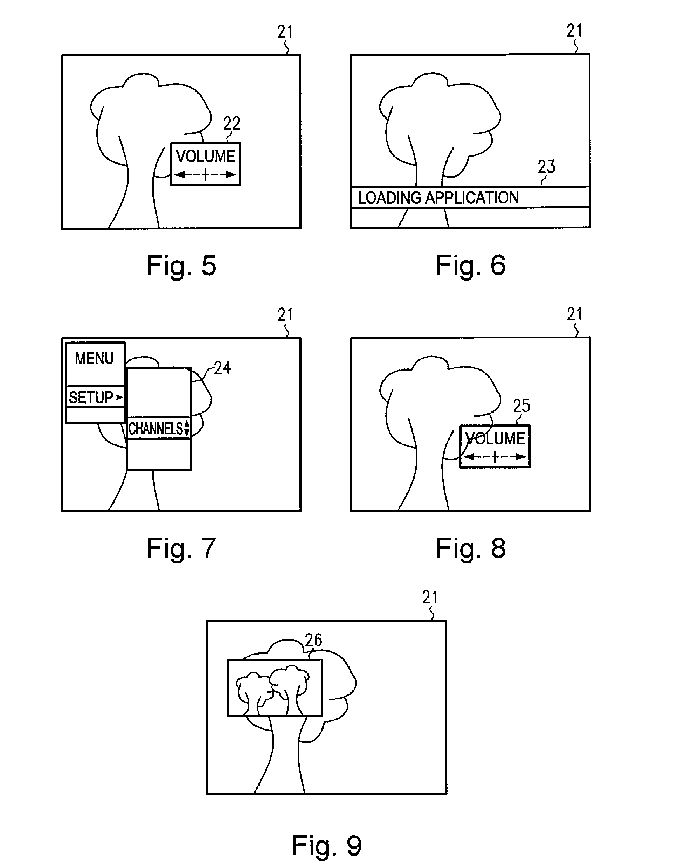

Figs. 5 to 9 illustrate examples of additional image data being superimposed on an input video signal. In Fig. 5 an additional image area 22 of a smaller size is superimposed on a video field/frame 21. The additional data are used for displaying information to the user. Examples of such information include setup or control functions of a video device, including DVB receivers, user information from application platforms like Multimedia Home Platform (MHP) or Free Universe Network (FUN) and also information which is transmitted additionally to the TV signal, e.g. program information of an electronic program guide (EPG).

As illustrated in Fig. 6, information may also be inserted as a bar 23 with still or moving text. OSDs may appear as a pull-down-menu 24 as illustrated in Fig. 7. An additional image 25 may also be transparently superimposed over the video image (Fig. 8). Other information may be displayed in additional images, including a picture-in-picture (PiP) image 26 displaying a further video signal at reduced size (Fig. 9).

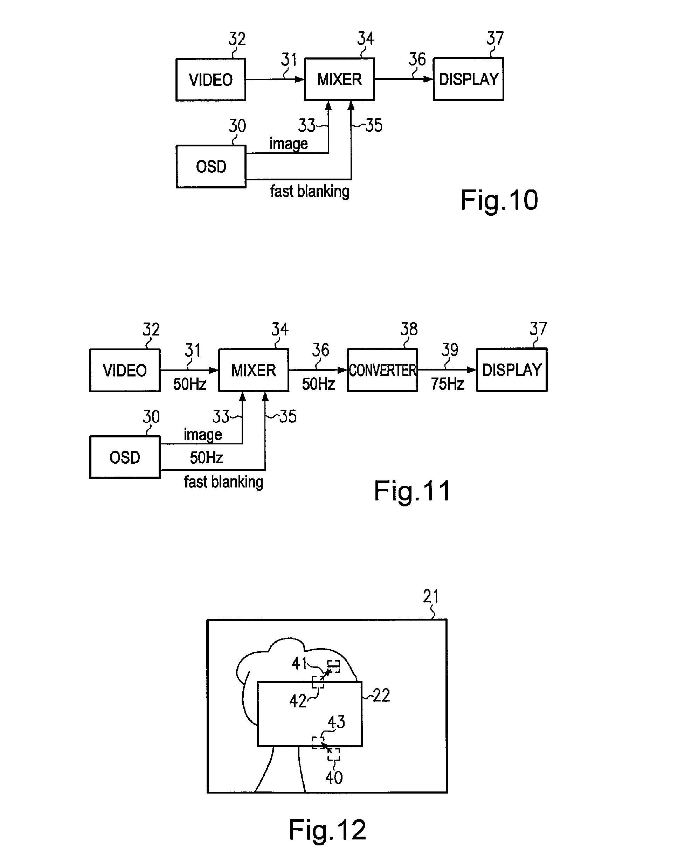

A block diagram of a configuration for superimposing additional image data is described below with reference to Fig. 10. A video signal 31 from a video source 32 and additional image data 33 from an OSD generator 30 are provided to a mixer 34 for superimposing the additional image 33 to a video image 31. The additional image 33 is superimposed by replacing the corresponding image area of the video image, based on a fast blanking signal 35 provided to the mixer 34. The fast blanking signal 35 controls a switching between image data of the video signal 31 and data of the additional image 33. By switching between the data of the two signals, a video image 31 and an additional image 33 are mixed and a mixed video signal 36 is output by mixer 34 and displayed on display 37.

It is desirable to subject such mixed video signals to image processing like frame rate conversion, de-interlacing, etc. An example of a configuration for further processing these mixed video signals is illustrated in Fig. 11. The configuration of Fig. 11 is almost identical to that of Fig. 10 with the exception of an additional processing circuit, i.e. converter 38. In this example converter 38 is an up-converter for converting the mixed video signal 36 from mixer 34 to a processed video signal 39 having a higher frame rate.

The processing of the above described mixed video signal may, however, result in artifacts in the superimposed image and the image area surrounding the superimposed image. Thus, the image quality of the output video signal may suffer due to an image processing intended for providing an output video signal of improved image quality.

An example for such an image quality degradation is illustrated in Fig. 12. Motion compensation may produce artifacts based on wrong motion vectors 41, 43 which are assigned to image areas 40, 42 in the border area of the additional image 22. Due to fine horizontal lines in the OSD image data, up-conversion may, in addition, produce annoying artifacts like line flicker inside the OSD image area.

Hence, the problem arises that a processing of a video signal having additional image data superimposed thereon may produce artifacts and decrease the perceived image quality.

It is therefore the object of the present invention to provide a method and a video processing unit for processing a video signal having an additional image superimposed thereon and providing a processed video signal of improved image quality.

This is achieved by the features of claim 1 for a method and the features of claim 15 for a video processing unit.

It is the particular approach of the present invention, to employ a control signal used for superimposing additional image data on an input video signal also for controlling the processing of the resulting mixed video signal.

In that way, a video signal, which has additional image data superimposed thereon may be processed without the occurrence of artifacts which originate from a uniform processing of the video image including the superimposed image data.

Preferably the control signal is synchronized with the pixel clock of the video signal. The synchronization to the pixel clock enables to switch the image processing on a pixel basis. Thus, the image processing can be switched for processing fine details differently. In particular, the processing is not restricted to predefined larger image areas, like rectangles underlying a displayed text. Text and single characters may thus be superimposed on the input video signal and processed separately therefrom.

According to a preferred embodiment, the image data of the additional image are generated together with the control signal. In that way, the control signal does not need to be generated separately and may efficiently be used for the superposition and the subsequent processing of the additional image data.

Preferably the additional image comprises user interaction information to be displayed together with the original video signal. When generating the user interaction information, for instance in a video display unit, the control signal used for superimposing the additional data may efficiently be supplied to the image processing stage for processing the mixed image signal.

According to a particular implementation, the additional image and the control signal are generated by an OSD circuit. As such an OSD circuit is usually present in video processing devices like VCRs, TV receivers, video display devices, etc., the control signal for switching between different image processing paths can be easily derived therefrom.

According to a further embodiment of the present invention, interpolation may be used, for instance, for de-interlacing and frame rate conversion. The control signal indicates the use of interpolation for those areas which would show artifacts if processed differently.

According to a preferred embodiment of the present invention, motion compensating is used, among others, for de-interlacing and frame rate conversion. Motion compensation is applied to image areas in accordance with the control signal, when no visible artifacts resulting from motion compensation may be expected.

Preferably, de-interlacing may be applied in the processing of the mixed image. For de-interlacing, different processing methods are available which may result in specific artifacts when uniformly applied to the mixed video signal and the superimposed image therein. By employing the control signal for de-interlacing separate areas of a video image by different methods artifacts may be avoided and the image quality can be increased.

In a preferred embodiment, the mixed video signal is converted to a different frame rate. For frame rate conversion, different processing methods are known, which may each result in specific artifacts when applied to the mixed video signal and the included superimposed image. The control signal may indicate a separate frame rate conversion processing for areas of the superimposed image and may thus avoid artifacts typical for such an area and a certain processing method.

Preferably, a frame rate conversion performs any of interpolating image data, applying motion compensation to the images and only using unprocessed video data from the input video signal in order to generate video images of the new frame rate. Each processing method has its advantages and drawbacks. Interpolation performs well when the video image content changes or comprises only a small amount of motion. The motion of moving image objects can be taken into account by employing motion compensation, but artifacts may occur in superimposed images and in the surrounding image area of superimposed image data. Unprocessed video data from the input mixed video signal may be used when the image content between subsequent images does not change. The control signal enables a selective application of any of such processing methods on separate areas of the video image including the superimposed image area, wherein no or only minor artifacts may result.

In a particular embodiment of the present invention, the processing, which is employed for frame rate conversion is selected in accordance with the control signal. Thus, the control signal does not only indicate separate image areas, but additionally includes information indicating a particular image processing. By employing the control signal for selecting a particular frame rate conversion method, namely interpolation, motion compensation or employing unprocessed video data from the mixed video signal, the control signal can indicate the application of a particular image processing for each image area. Thus, the occurrence of artifacts is minimized.

Preferably image data of the additional image within the mixed video signal are used without any further processing. By directly employing the unprocessed data of the additional image, their image quality can be maintained and artifacts can be avoided.

According to another embodiment, image data of the superimposed image within the mixed video signal are only interpolated. Processing a superimposed image by performing an interpolation of its image data can avoid artifacts. For instance, a transparently superimposed image may suffer from motion compensation due to wrong motion vectors of image objects moving in its background image. Interpolation can avoid such artifacts and still display motion reasonably smooth.

According to a further aspect, image data of the video signal surrounding the image area of the additional image data are only subjected to image data interpolation. Processing the surrounding area by motion compensation can produce artifacts as wrong motion vectors may occur in the area surrounding the superimposed image. The artifacts can be avoided by employing interpolation.

Preferably the control signal comprises processing selection information in accordance with the image content of the mixed video signal. The processing selection information indicates a particular processing for particular image areas. Such a control signal enables the use of an appropriate processing in each image area in accordance with the image content of that area.

According to a preferred embodiment, the video processing unit of the present invention comprises a display for displaying the mixed video signal.

According to another embodiment, the video processing unit of the present invention comprises different processing paths for the input video signal and a selector for selecting one of the processing paths in accordance with the control signal. Each processing has advantages and drawbacks. By employing the control signal for selecting an appropriate processing path for the processing of each separate image area, the occurrence of artifacts can be minimized.

According to a further embodiment the processing paths comprise any of interpolating image data, applying motion compensation to the images and using unprocessed video data. Each processing has its advantages and drawbacks. The corresponding path may be selected by the control signal to minimize the occurrence of artifacts and increase the image quality when processing image data of separate areas of video images.

In another embodiment of the present invention the selector for selecting a processing path comprises a binary switch. This switch may be used for selecting between two processing path. Such a switch is easily implemented or added to existing designs and may be operated at a high speed.

In a further embodiment of the present invention the selector for selecting a processing path comprises a cascade of binary switches. A cascade of binary switches hierarchically selects among several processing paths, and may be implemented with low effort and be operated at high speed.

Preferably the switches are controlled by binary switch control signals. Between integrated circuits, information may be exchanged by employing a serial inter IC bus, e.g. the I²C bus. Such a bus may need considerable implementation effort and may not reach pixel clock speed. In contrast, a binary control signal may be used to control the switches of a selector directly, employing a simple interface. If an intermediate processing of the control signal is necessary, binary signals are easily buffered or processed otherwise.

Preferably the present invention is employed in any of the following devices, including a television receiver, a DVB receiver, a video monitor, a video recorder, a video playback device, including a DVD player, a video cd player or other video playback devices. Each such device may advantageously employ a superposition of additional images and an improvement of the quality of the output video signal for customer satisfaction. By employing the control signal in these devices to control both, superposition and processing, an improved image quality is achieved, as areas relating to the superimposed image are processed differently.

Further embodiments are the subject-matter of dependent claims.

Preferred embodiments of the present invention will now be described in detail by referring to the drawings, in which:
Fig. 1 is a diagram, illustrating time intervals of fields/frames for video signals of different field/frame rates.
Fig. 2 is a diagram, illustrating the motion of an object in conventional frame rate up-conversion without any additional image processing.
Fig. 3 illustrates the motion of an object in a conventional frame rate up-conversion employing image interpolation.
Fig. 4 illustrates the motion of an object in a conventional frame rate up-conversion employing motion compensation.
Fig. 5 shows a display screen of a display unit with a superimposed OSD image.
Fig. 6 shows a display screen with a superimposed bar-like OSD image.
Fig. 7 shows a display screen with a superimposed pull-down-menu.
Fig. 8 shows a display screen with a superimposed transparent OSD image.
Fig. 9 shows a display screen with a superimposed picture-in-picture image.
Fig. 10 is a block diagram showing a configuration for the superposition of additional image data from an OSD circuit.
Fig. 11 is a block diagram showing a configuration for the generation and insertion of an OSD image and subsequent image processing of the resulting image signal.
Fig. 12 illustrates artifacts resulting from motion compensation due to wrong motion vectors in the image area surrounding the superimposed additional image.

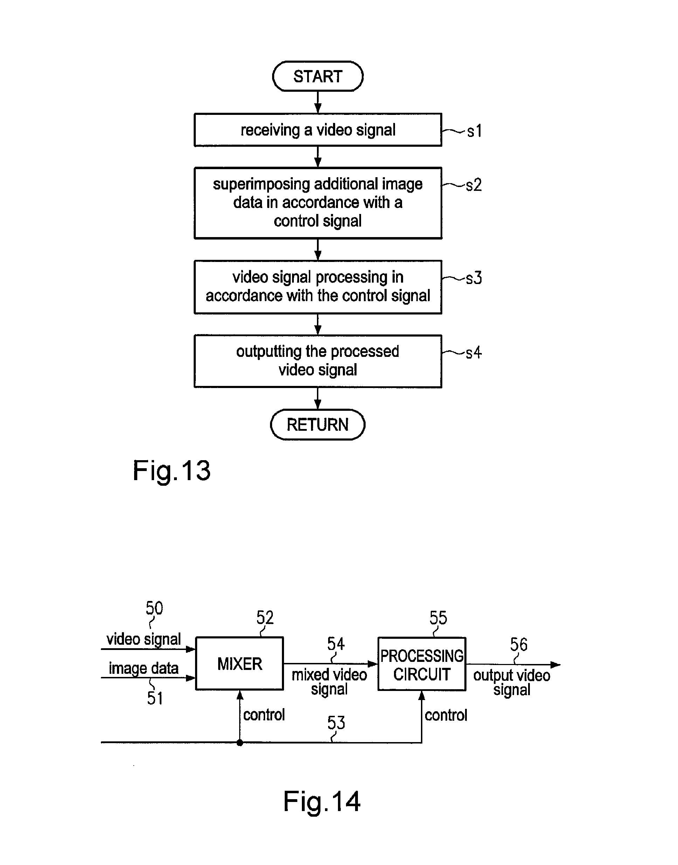

Fig. 13 is a flowchart depicting the processing of image data in accordance with the present invention.
Fig. 14 is a block diagram showing a video processing unit in accordance with the present invention.

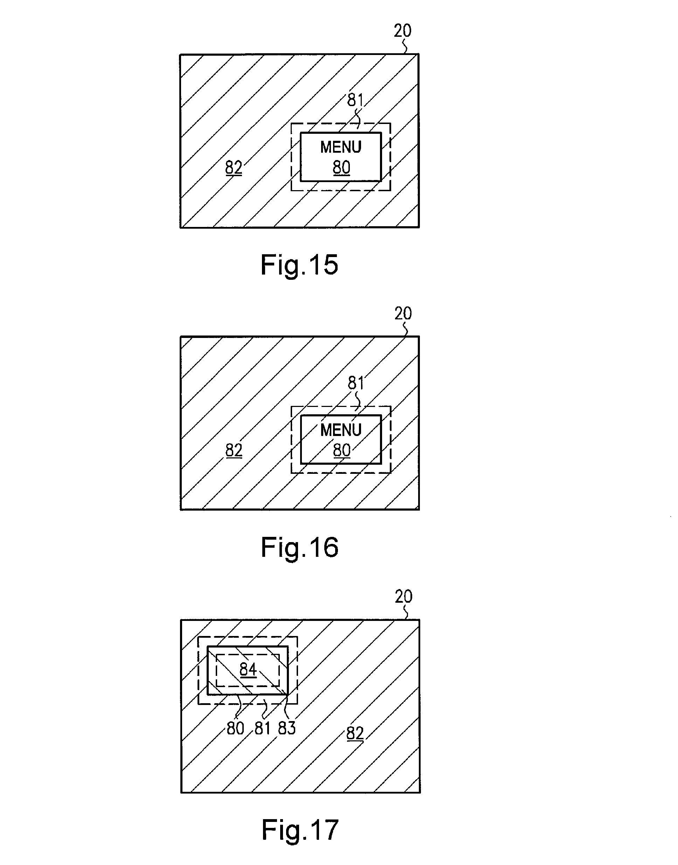

Fig. 15 is an example of a display screen having different image areas to be separately processed.
Fig. 16 illustrates an example similar to that of Fig. 15, with the exception of a transparent OSD image superimposed on the input video signal.
Fig. 17 illustrates an example similar to that of Fig. 15, with the exception of a picture-in-picture image superimposed on the input video signal.

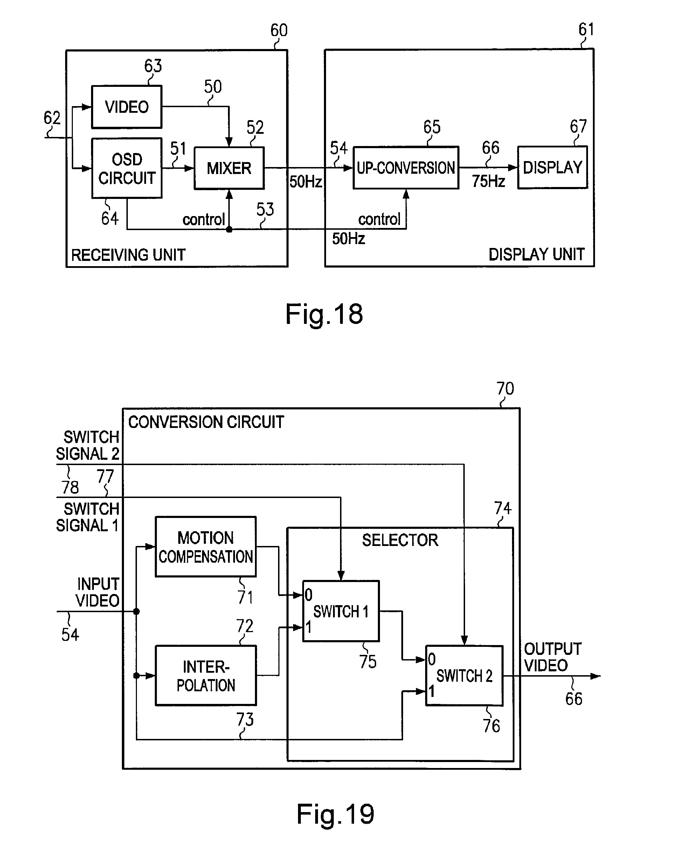

Fig. 18 is a block diagram illustrating a television receiver in accordance with the present invention.
Fig 19 is a block diagram depicting a frame rate converter in accordance with the present invention.

The features and advantages of the present invention will be made apparent by the following detailed description of particular embodiments thereof, wherein reference is made to the drawings.

The present invention provides a method and a processing unit for processing separate image areas of a video signal differently. Referring specifically to the flowchart of Fig. 13, additional image data are superimposed on the video images of a received video signal (steps s1, s2) in accordance with a control signal indicating the insertion position of the additional image data.

The video signal including the additional image is processed in accordance with the control signal (step s3) and the processed video signal is output (step s4), preferably for display on a display device. The superimposed image data and the video data surrounding the superimposed image can be processed differently on the basis of the control signal. In contrast to a uniform image processing, artifacts can be avoided by always employing an appropriate image processing method.

An apparatus in accordance with the present invention is illustrated in Fig. 14. The video signal 50 and the image data 51 are supplied to mixer 52. Mixer 52 superimposes the additional image data 51 to the images of the video signal 50 in accordance with the control signal 53 and outputs a mixed video signal 54. The mixed video signal 54 and the control signal 53 are fed to a processing circuit 55 processing the mixed video signal 54 in accordance with the control signal 53. The processed video signal 56 is output from processing circuit 55, preferably for being displayed on a display device.

Among other processing possibilities, processing circuit 55 may perform an image improvement processing like de-interlacing, noise-reduction, image stabilization and frame rate conversion, specifically a frame rate up-conversion.

Processing circuit 55 preferably performs a frame rate up-conversion. Frame rate up-conversion is desirable in order to reduce flicker on large displays by driving the display at frame rates up to 100Hz. As described before, different up-conversion algorithms have their specific advantages and drawbacks for processing different image content. Therefore it is an important application of the present invention to advantageously employ different up-conversion algorithms for separate image areas.

Although the present invention will now be described with reference to an up-conversion process by referring to Figs. 15 to 17, the invention is not limited to frame rate up-conversion. A person skilled in the art may easily devise other implementations like standards conversion, down-conversion, de-interlacing, etc. without leaving the scope of the present invention.

Artifacts resulting from motion compensation are briefly summarized by referring to Fig. 12. The application of motion compensated up-conversion to a video signal 21 containing a superimposed image 22 can produce wrong motion vectors 41, 43. Typically image objects 40, 42 moving out from or getting masked behind the superimposed image result in such wrong vectors 41, 43. This may distort the superimposed image area. In addition, due to fine horizontal lines in the OSD image data, up-conversion algorithms, especially algorithms employing motion estimation, can produce annoying artifacts like line flicker. For these reasons the image area corresponding to the superimposed image 22 should not be processed by applying motion compensation.

Also the image area surrounding the superimposed image 22 may suffer from artifacts resulting from wrong motion vectors. Image data 42, which in part contain image data of the superimposed image may be displaced into the area surrounding the superimposed image by a wrong motion vector 41. Such a motion vector 41 may be produced for image objects in proximity of the superimposed image. Therefore, not only the area of the superimposed image but also the area of the video image surrounding the additional image should not be processed by motion compensation. The size of this surrounding area may be defined based on a maximum size of possible motion vectors, e.g. based on the search range during motion estimation or other limits.

The application of different up-conversion methods for a video signal, having an opaque additional image superimposed thereon will be described in detail with reference to Fig. 15. The images 20 of the video signal are divided into separate image areas. The configuration of the image areas is represented by the control signal. The different image areas are denoted by reference numerals 80, 81 and 82 in Fig. 15. Numeral 80 denotes the area of the superimposed image, 81 an image area surrounding the superimposed image area 80, and 82 the original input video image except the image areas 80 and 81.

The area of the superimposed image 80 is not subjected to any processing. Hence, the OSD image data are up-converted in their original high quality by avoiding the generation of artifacts. Fine structures and lines can be preserved, and the on-screen-display image is sharp and clear.

For image data of the image area 81, surrounding the superimposed image 80, an interpolation of the image data is applied. Thus, image data surrounding the inserted OSD image may not be distorted by artifacts which are related to motion compensation.

Motion compensation is applied for the frame rate up-conversion of the image data of the remaining video image area 82. Area 82 does not contain irregularities like superimposed image data. Hence, motion compensation may result in a high quality for processing image data of area 82.

Thus, it is the particular advantage of the present invention, that a high image quality can be achieved in the frame rate up-conversion, by employing the control signal to process separate areas differently. Accordingly, motion compensation is applied for those image areas containing moving objects without distorting the image quality of other image areas.

Referring now to Fig. 16, a similar separation and processing of an input video signal is illustrated. This example differs from Fig. 15 in that the additional image data are superimposed transparently on the image data of the input video signal.

The image data of the transparent image of image area 80 are preferably processed by interpolation. The area 80 can contain moving objects in the background of the superimposed image data. Due to a transparent superposition of different image data in the same image area 80, motion estimation may produce wrong motion vectors. By employing interpolation of the image data, artifacts resulting from wrong motion vectors can be minimized.

The data of image areas 81 and 82 may be processed in the same manner as described with reference to Fig. 15 relating to a superposition of opaque additional image data.

Another example relating to a video signal containing a superimposed picture-in-picture image is illustrated in connection with Fig. 17. Picture-in-picture image data in image area 80 may be processed by interpolation. Performing interpolation on image data of image area 80 may avoid artifacts resulting from motion compensation. As the picture-in-picture image area 80 is of a small size, interpolation may result in sufficient quality.

According to an alternative embodiment, motion compensation is applied to image data of the picture-in-picture image. However, motion estimation may produce motion vectors indicating a translation of image data from outside the picture-in-picture image area 80 into the picture-in-picture image area 80. Such motion vectors may result in artifacts in the picture-in-picture image area 80.

Still, motion compensation may be applied to image data of the picture-in-picture image area 80 by ensuring that motion estimation may not take image data of the image areas outside the picture-in-picture image into account. This may be achieved by separating an inner area 84 of the picture-in-picture image from the outside areas 81 and 82 of the video image 20. In that inner area 84 motion compensation and thus motion estimation may be performed. An outer area 83 surrounding the inner area 84 inside picture-in-picture image area 80 is again defined based on a maximum motion vector. For that outer area 83 interpolation of the image data is preferred. The inner area 84 of the picture-in-picture image, may thus be processed by applying motion compensation.

The motion of objects in the input video image 20 is taken into account by processing the data of image areas 81 and 82 in the same manner as described with reference to Fig. 15 relating to a superposition of opaque additional image data.

In each of these cases, the control signal can indicate a processing mode, which is appropriate for the content of the corresponding image area, with the result that no or only minor artifacts may occur. Thus a high video image quality can be obtained in the processed video signal.

Referring now to Fig. 18, a television receiver, for instance an integrated digital TV receiver (IDTV), in accordance with the present invention is described. The television receiver contains a receiving unit 60 and a display unit 61. Receiving unit 60 receives a television signal 62 and provides a video signal 54 to be displayed. The video signal 54 output by the receiving unit 60 may have additional image data superimposed thereon. The display unit 61 displays the received video data on display 67. For improving the image quality the display unit 61 further processes the video signal 54.

Such an image processing can include a frame rate up-conversion which reduces the flicker of displayed video images.

The receiving unit 60 of the television receiver will now be described in more detail. Receiving unit 60 comprises a video signal generator 63 receiving a television signal 62 and generating an input video signal 50 therefrom. The video signal generator 63 may receive any kind of analog or a digital television signal 62.

The receiving unit 60 further comprises an OSD circuit 64. OSD circuit 64 generates an additional image 51 for being superimposed on input video signal 50. Such additional image data 51 is employed for displaying a graphical user interface which may relate to setup or control functions of a video device, including a DVB receiver, and user information from application platforms like Multimedia Home Platform (MHP) or Free Universe Network (FUN). The additional image data may also include videotext data. These data is transmitted with the television signal and can be received by the OSD circuit. OSD circuit 64 generates the image data 51 to be superimposed and, in addition, the control signal 53 which indicates the position where the additional image 51 is inserted into the video image 50. As described above, the control signal may also include information indicating a particular processing of the additional image area.

A further component of the receiving unit 60, mixer 52, uses the control signal 53 to perform the superposition of the additional image data 51 on the video signal 50 and outputs a mixed video signal 54. In accordance with the control signal, image data of the input video signal 50 is replaced or transparently overlaid with data of the additional image 51.

In a particular embodiment, receiving unit 60 may be a DVB receiver. Accordingly the video signal generator 63 receives a digital television signal 62 specified by DVB-T, DVB-S or DVB-C standard, each comprising a transport stream specified by the MPEG-2 standard. Such a digital television signal 62 may also include information being transmitted additionally with the TV program like program information for an electronic program guide (EPG).

The display unit 61 of the television receiver will be described in detail with reference to the block diagram of Fig. 18. In the display unit 61, the mixed video signal 54 is up-converted to a higher frame rate in order to reduce the flicker of the displayed image. In addition, the mixed video signal may be de-interlaced and displayed as a progressive video signal, further increasing the image quality by e.g. reducing line flicker. This up-conversion is performed by up-conversion circuit 65, producing an up-converted video signal 66 in accordance with control signal 53. The control signal 53 is obtained from the OSD circuit 64 of the receiving unit 60. Control signal 53 indicates a different processing for separate areas within the mixed video signal 54. By processing the area of the superimposed image data 51 in the mixed video signal 54 differently a high quality of the displayed video image is ensured by avoiding artifacts due to a particular image processing being applied to that particular areas of the video images of video signal 54.

In a television receiver, a control signal which is generated by standard OSD circuits and employed in a mixer for inserting additional image data into a video image is usually denoted as "fast blanking signal". The fast blanking signal indicates the area of the superimposed image within the video image and is preferably employed for the control of the up-conversion procedure. As the fast blanking signal has the same frequency as the pixel clock of the mixed video signal, an accurate separation of the OSD image area and the remaining video image area is performed.

The fast blanking signal comprises only two different signal levels, for indicating the area of the superimposed image with respect to the input video signal. By employing the fast blanking signal for switching between different processing, only two different processing methods can be employed. For enabling a selection between a plurality of different processing methods, the control signal needs to provide additional control information. An example for performing a different processing based on such additional control information is described above with reference to Figs. 15 to 17, wherein a video image is separated into the area of the superimposed image, the area surrounding the superimposed image and the area of the input video signal, each of which are processed differently.

A control signal adapted for selecting between more than two processing methods may be generated by a modified OSD circuit. A modified OSD circuit can generate the control signal based on the current position of the superimposed image. It may, for instance, employ the position information to calculate the position of an area surrounding the superimposed image. Further it may use information corresponding to the image content or type of the additional image, i.e. picture-in-picture image data, opaque or transparent image data etc., to generate the control signal 53 which indicates a particular processing method for the area of the additional image.

An example for a conversion circuit 70 performing an up-conversion in accordance with the control signal is described in more detail by referring to Fig. 19. The conversion circuit 70 receives the mixed video signal 54 for up-conversion. For selecting among different processing method the conversion circuit receives a control signal comprising a first and a second switch signal 77 and 78. For performing the up-conversion, conversion circuit 70 provides three different processing paths 71, 72 and 73 for generating an up-converted video signal. A selector 74 is provided to select the processed data from one of the processing paths 71, 72 or 73, preferably on a pixel basis.

The first processing path 71 of the conversion circuit 70 processes the mixed video signal 54 by employing motion compensation. Motion compensation may include a motion estimation for recognizing image data as moving objects and assigning motion vectors to that image data. The second processing path 72 is interpolating image data for generating additional frames. The interpolation is based on the frames of the input video signal 54. The third processing path 73 provides unprocessed image data of the input video signal 54.

As shown in Fig. 19, selector 74 may comprise two binary switches 75 and 76 which are arranged in a cascade configuration. First switch 75 selects between the image data provided by the first and second processing paths 71, 72 and second switch 76 selects between the image data provided by third processing path 73 and the processing path selected by the first switch 75.

The first and the second switch 75 and 76 are controlled by the first and the second switch signal 77 and 78, respectively. In this embodiment, each switch signal may have two different levels, i.e. low, denoted as 0, and high, denoted as 1. In Fig. 19, the input of each switch which is selected by the corresponding switch signal level is denoted as 0 or 1, in accordance with the definition of the switch signal levels.

Both switch signals 77, 78 are synchronized to the pixel clock of the video signals output by the processing paths 71, 72, 73 ensuring a correct timing of all signals and may thus select between the processing paths 71, 72, 73 with pixel-accuracy. In addition, the output video signals of processing paths 71, 72, 73 are synchronized to each other in order to provide accurate switching between the data of the parallel processing paths.

An example for a particular implementation of the switching conditions in selector 74 are now described in detail. The description will be based on the combinations of the switch signal levels, i.e. low, denoted as 0, or high, denoted as 1.
- First switch signal 77 = 0, second switch signal 78 = 0:
   This switch signal setting selects output image data from the first path 71, which performs frame rate conversion by applying motion compensation. It is preferred for the processing of image areas with motion and reliable motion vectors. Further, this can be the default working mode if no OSD image is inserted. Referring to Fig.15 to 17, this setting is assigned to the video image area 82.
- First switch signal 77 = 1, second switch signal 78 = 0:
   This switch signal setting selects the output of image data from the second path 72, which performs frame rate conversion by applying image data interpolation. It is preferred for the processing of areas surrounding inserted OSD images or picture-in-pictures images and for the processing of the area of transparently superimposed OSD images. In contrast to motion compensation, artifacts caused by wrong motion vectors are avoided. Referring to Figs.15 to 17, this setting is assigned to the video image area 81 surrounding a superimposed image, the image area 80 of a transparently superimposed image and the outer area 83 of a picture-in-picture image.
- First switch signal 77 = 1, second switch signal 78 = 1:
   This switch signal setting selects unprocessed input video data 54 from the third path 73. It is preferred for the processing of areas of static OSD images to avoid artifacts and preserve fine structures and lines in the OSD image. Referring to Fig.15, this setting is assigned to the video image area 80 of the superimposed OSD image.
- First switch signal 77 = 0 (low), second switch signal 78 = 1 (high):
   This switch signal setting also selects unprocessed input video data 54 from the third path 73.

The fast blanking signal of a standard OSD circuit may be used as the second switch signal 78, as the second switch 76 controls the processing of the image area of the additional image data.

Binary switch signals 77, 78 enable the use of an existing fast blanking signal as control signal 53 or part thereof. Further binary switch signals may be easily buffered of otherwise processed, in order to compensate for a delay e.g. in additional intermediate video processing.

In an alternative embodiment, the frame rate is converted to a lower frame rate in order to display video signals of different standards on the same screen at the same frame rate. Similar to up-conversion, different frame rate conversion methods are also applicable in down-conversion in accordance with the control signal employed by the present invention.

In another embodiment, the processing of a video signal comprising additional image data may include a noise reduction to further improve the image quality.

Still another embodiment may improve the image quality by image stabilization removing slight shifts of the whole image.

When a moving ticker is inserted into the video signal, in order to continuously display information together with the video signal, the present invention enables a different processing of such a ticker. According to a preferred embodiment, the uniform motion of the ticker is taken into account, e.g. by providing a predetermined motion vector as part of the control signal.

In a further embodiment, video signals are processed by a frame rate conversion employing motion vectors transmitted together with the video signal. Such motion vectors are obtained in the compression of a video signal together with the compressed signal. These transmitted vectors are used when applying motion compensation for up- or down-conversion of the decompressed video signal instead of performing motion estimation. As the transmitted motion vectors do not correspond to the superimposed image but to the image data of the input video signal, a separate processing of the image area of the superimposed image, in accordance with the present invention, can avoid artifacts, due to motion vectors not related to the additional image data.

Preferably, when processing image data of a superimposed image or image data of areas surrounding a superimposed image, motion vectors are limited in magnitude and direction, so as not to distort the inserted image. The control signal may indicate such a limitation.

In a further embodiment, cascaded processing methods can be applied to a video signal comprising superimposed image data in accordance with the present invention. To this end, a first processing is applied to the video signal in accordance with the control signal and subsequently further processing can be applied in accordance with the control signal. The processing methods may be performed by separate devices, each being supplied with the control signal.

Summarizing, the present invention relates to a method and an apparatus for processing an input video signal which comprises a plurality of subsequent video images. An additional image is superimposed on the input video signal in accordance with a control signal for producing a mixed video signal. Said control signal indicates the image area for superimposing the additional image. The mixed video signal is subsequently processed by a processing circuit in accordance with the control signal. The control signal indicates a different processing for separate image areas. In that way, a video signal, which has additional image data superimposed thereon may be processed without the occurrence of artifacts originating from a uniform processing of the mixed video signal.

## Claims

1. A method for processing a video signal, comprising the steps of:
receiving (s2) a video signal including a plurality of subsequent video images,
superimposing (s3) an additional image on a video image of said video signal in accordance with a control signal (53) for producing a mixed video signal, said control signal (53) indicating an image area for superimposing said additional image,
processing (s4) said mixed video signal for producing a processed video signal, and
outputting (s5) said processed video signal,
**characterized in that**
the processing (s4) of said mixed video signal is performed in accordance with said control signal (53) by processing said mixed video signal differently for separate image areas.

2. A method for processing a video signal according to claim 1, wherein said video signal and said control signal (53) have the same pixel clock frequency.

3. A method for processing a video signal according to claim 1 or 2 further comprising the step of generating the image data of said additional image together with said control signal (53).

4. A method for processing a video signal according to claim 3 wherein said image data include user interaction information to be displayed on a screen together with the video signal.

5. A method for processing a video signal according to any of claims 1 to 4 wherein said step of processing (s4) said mixed video signal includes the step of interpolating image data of said mixed video signal.

6. A method for processing a video signal according to any of claims 1 to 5 wherein said step of processing (s4) said mixed video signal includes the step of performing a motion compensation of said mixed video signal.

7. A method for processing a video signal according to any of claims 1 to 6 wherein said processing step (s4) includes the step of de-interlacing said mixed video signal for producing a progressive video signal.

8. A method for processing a video signal according to any of claims 1 to 7 wherein said processing step (s4) converts the frame rate of said mixed video signal from a first frame rate to a second frame rate.

9. A method for processing a video signal according to claim 8 wherein said frame rate conversion employs at least one of image data interpolation, motion compensation and using the unprocessed video data for generating video images of the second frame rate.

10. A method for processing a video signal according to claim 9 wherein the employed image processing is selected in accordance with said control signal (53).

11. A method for processing a video signal according to claim 9 or 10 wherein the image data of said additional image are only used without any further processing.

12. A method for processing a video signal according to claim 9 or 10 wherein the image data of said additional image are only subjected to image data interpolation.

13. A method for processing a video signal according to claim 9 or 10 wherein the image data of said video signal surrounding said additional image in said mixed video signal are only subjected to image data interpolation.

14. A method for processing a video signal according to any of claims 1 to 13, wherein said control signal (53) further comprising processing selection information in accordance with the image content of the mixed video signal.

15. A video processing unit for receiving a video signal (50) including a plurality of subsequent video images and for outputting a processed video signal (56) comprising:
a mixer (52) for producing a mixed video signal (54) by superimposing an additional image (51) on a video image of said video signal (50) in accordance with a control signal (53), said control signal (53) indicating an image area for superimposing said additional image (51), and
a processing circuit (55) for processing said mixed video signal (54),
**characterized in that**
said processing circuit (55) is adapted for processing said mixed video signal (54) in accordance with said control signal (53) by processing said mixed video signal (54) differently for separate image areas.

16. A video processing unit according to claim 15, further comprising a display (67) for displaying said processed video signal (56, 66).

17. A video processing unit according to claim 15 or 16, wherein said video signal (50) and said control signal (53) have the same pixel clock frequency.

18. A video processing unit according to any of claims 15 to 17, further comprising an image generator (64) for generating said additional image (51) together with the corresponding control signal (53).

19. A video processing unit according to claim 18, wherein said image generator (64) being an on-screen-display circuit.

20. A video processing unit according to any of claims 15 to 19, wherein said processing circuit (55, 65) being adapted to interpolate image data.

21. A video processing unit according to any of claims 15 to 20, wherein said processing circuit (55, 65) being adapted to apply motion compensation.

22. A video processing unit according to any of claims 15 to 21, wherein said processing circuit (55, 65) being adapted to de-interlace said mixed video signal (54).

23. A video processing unit according to any of claims 15 to 22, wherein said processing circuit (55, 65) being a frame rate converter for converting the frame rate of said mixed video signal (54) from a first frame rate to a second frame rate.

24. A video processing unit according to any of claims 15 to 23, wherein said processing circuit (55, 65, 70) comprises different processing paths (71, 72, 73) for processing said mixed video signal (54) and a selector (74) for selecting one of said processing paths (71, 72, 73) in accordance with said control signal (53, 77, 78).

25. A video processing unit according to claim 24 wherein said processing paths (71, 72, 73) comprising at least one of image interpolation (72), motion compensation (71) and using the unprocessed video data (73).

26. A video processing unit according to claim 24 or 25 wherein said selector (74) comprises at least a binary switch (75, 76).

27. A video processing unit according to any of claims 24 to 26 wherein said selector (74) comprises a cascade of binary switches (75, 76).

28. A video processing unit according to claim 28 or 29 wherein each switch (75, 76) being controlled by a binary control signal (77, 78).

29. A video processing unit according to any of claims 15 to 28, wherein said video processing unit being one of a television receiver, a DVB receiver, a video monitor, a video recorder and a video playback device, including a DVD-player, a video-cd player and other digital video playback devices.
